(19) Europäisches Patentamt
European Patent Office
Office européen des brevets

(11) **EP 3 029 427 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(51) Int Cl.:
*G01D 5/244* *(2006.01)*     *H02K 29/08* *(2006.01)*

(21) Anmeldenummer: **15197409.4**

(22) Anmeldetag: **02.12.2015**

(54) **VORRICHTUNG UND ALGORYTHMIK ZUR RADIALEN MECHANISCH ABSOLUTEN WINKELBESTIMMUNG EINER WELLE**

DEVICE AND ALGORITHM FOR RADIAL MECHANICALLY ABSOLUTE ANGLE DETERMINATION FOR A SHAFT

DISPOSITIF ET ALGORITHME DESTINES A LA DETERMINATION D'ANGLE MECANIQUE RADIAL ABSOLU D'UN ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2014 DE 102014224961**

(43) Veröffentlichungstag der Anmeldung:
**08.06.2016 Patentblatt 2016/23**

(73) Patentinhaber: **ROBERT BOSCH GMBH**
**70442 Stuttgart (DE)**

(72) Erfinder:
• **Jose, Stanley Kurian**
**70439 Stuttgart (DE)**
• **Meyer, Marcus**
**76316 Malsch (DE)**

(56) Entgegenhaltungen:
**EP-A1- 2 559 971     DE-A1-102006 051 720**

**Beschreibung**

Stand der Technik

Die vorliegende Erfindung betrifft ein Fahrzeug, eine Rotationsmaschine sowie eine Vorrichtung zur mechanisch absoluten Winkelbestimmung einer Welle einer Rotationsmaschine. Insbesondere betrifft die vorliegende Erfindung ein kostengünstiges Sensorkonzept zur Rotorlagebestimmung, welches zudem eine einfache flexible Konstruktion ermöglicht.

Für die Ansteuerung und Regelung von EC-Motoren in der Automobilelektronik sowie in elektrisch antreibbaren Fortbewegungsmitteln (z.B. Pedelecs und E-Bikes) wird je nach Motoransteuerung eine Rotorlageinformation benötigt. Diese wird anhand einer Winkelposition, in welcher sich die Motorwelle befindet, ermittelt. Der Winkel muss je nach Anforderung des Produktes mit einer hohen Genauigkeit (kleiner 0,5°) gemessen werden. Es wird unterschieden zwischen elektrisch absoluter und mechanisch absoluter Winkelmessung. Bei der elektrisch absoluten Winkelmessung wird nur die Winkelveränderung innerhalb eines Polpaarwechsels des Motors betrachtet. Bei der mechanisch absoluten Winkelmessung wird eine Winkelveränderung über 360° der Motorwelle (unabhängig von der Anzahl von Motorpolen) festgestellt.

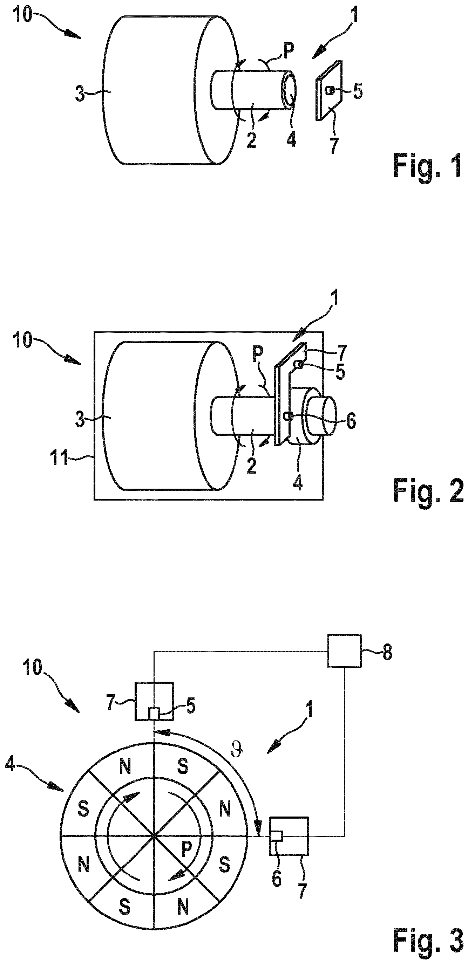

Aktuell werden hauptsächlich mechanisch absolute Sensorsysteme in Produkten wie Wischersystemen, elektrisch antreibbaren Fahrrädern oder elektrischen Stellern eingesetzt. Bei der mechanisch absoluten Winkelmessung wird der Winkel überwiegend über magnetoresistive Sensorsysteme gemessen. Das Sensorsystem besteht aus einem Sensormagneten (Magnetfeldgeber) und einem magnetoresistiven Sensor (wie z.B. AMR, GMR oder TMR). Diese Systeme sind axial ausgelegt, d.h., der Sensormagnet wird am Motorwellenende axial befestigt. Der Sensor wird dabei üblicherweise parallel zum Sensormagneten positioniert. Auf einen derartigen Aufbau wird in Verbindung mit Figur 1 eingegangen. Eine solche mechanische Anordnung erhebt die Anforderung an die Elektronik, dass diese oberhalb von der Motorwelle platziert werden muss. Diese Tatsache zwingt Produkte, in denen sich die Hauptelektronik für die Motoransteuerung nicht außerhalb der Motorwelle befindet, zu mehr Aufwand und mehr Kosten, um den Sensor oberhalb des Wellenendes zu platzieren. Daher wäre eine radiale Platzierung der Sensoren zur Motorwelle als Alternative von großer Bedeutung.

DE 10 2010 040 861 A1 offenbart einen elektronisch kommutierten Elektromotor mit einem Rotorpositionssensor, welcher eine radiale Sensierung zeigt, welche von einem ganzzahligen Verhältnis zwischen Gebermagnet und Rotormagnet Polpaarzahl ausgeht. Die gezeigte Anordnung kann daher ausschließlich eine elektrisch absolute Winkelbestimmung vornehmen.

DE 10 2011 079 962 A1 offenbart einen Elektromotor mit einem Rotorpositionssensor, bei welchem das Streufeld des Rotors erfasst und zur Winkelpositionsbestimmung verwendet wird. Auch hierbei wird lediglich eine elektrisch absolute Winkelposition ermittelt. EP 2 559 971 A1 offenbart einen absoluten Rotationsdetektor mit zwei um 90° versetzten Magnetfeldsensoren, wobei die absolute Winkelbestimmung unter Ausnutzung der bekannten Polbreitenvariation geschieht.

Es ist eine Aufgabe der vorliegenden Erfindung, ein alternatives, kostengünstiges Sensorkonzept zur aktuellen axialen Rotorlagebestimmung aufzuzeigen. Insbesondere sollen derart ausgestattete Produkte mit einer Motorsteuerelektronik parallel zur Motorwelle ausgestattet werden können. Insbesondere soll eine kostengünstige, mechanisch absolute Winkelmessung mit einer Messungenauigkeit kleiner als 1% ermöglicht werden.

Offenbarung der Erfindung

Die vorstehend identifizierte Aufgabe wird erfindungsgemäß durch eine Vorrichtung zur mechanisch absoluten Winkelbestimmung einer Welle einer Rotationsmaschine gemäß Anspruch 1 gelöst. Die Vorrichtung umfasst einen Magnetkranz mit einer Vielzahl magnetischer Pole. Der Magnetkranz dient insbesondere ausschließlich der Winkelbestimmung und kann bevorzugt (ausschließlich) Permanentmagneten umfassen. Zusätzlich sind ein erster Magnetfeldsensor und ein zweiter Magnetfeldsensor sowie eine Auswerteeinheit vorgesehen. Der Magnetkranz ist eingerichtet, insbesondere in azimutaler Erstreckungsrichtung an/auf der Welle der Rotationsmaschine (z.B. ein Elektromotor, ein elektrischer Generator o.Ä.) angeordnet zu werden. Die Magnetfeldsensoren sind eingerichtet, die Magnetfelder, welche durch den Magnetkranz bereitgestellt werden, zu detektieren, wenn sie sich im Zuge einer Rotation der Welle an den Magnetfeldsensoren vorbeibewegen. Die Auswerteeinheit ist eingerichtet, auf Magnetfeldsignalen der Magnetfeldsensoren basierende Signale miteinander zu vergleichen. Mit anderen Worten liefern die von den Magnetfeldsensoren bereitgestellten elektrischen Signale Informationen, auf Basis welcher die Auswerteeinheit einen Vergleich ausführt. Eine Vorverarbeitung der elektrischen Signale der Magnetfeldsensoren ist also ausdrücklich als im Rahmen der vorliegenden Erfindung möglich zu betrachten. Eine eindeutige Zuordnung von Eigenschaften der analysierten Signale zu einer mechanisch absoluten Winkelposition erfolgt erfindungsgemäß durch die Identifikation fertigungsbedingter Unregelmäßigkeiten des Magnetkranzes bzw. seiner magnetischen Pole (z.B. in azimutaler Richtung (Drehrichtung) verteilte Streuungen o.Ä.), um anhand identifizierter Unregelmäßigkeiten eine mechanisch absolute Winkelbestimmung der Welle vorzunehmen. Im Unterschied zum Stand der Technik wird durch die Verwendung zweier Sensoren an ein und demselben Magnetkranz eine derart differenzierte Untersuchung der Magnetfelder möglich, dass sozusagen ein "magnetischer Fingerabdruck" des Magnetkranzexemplars erstellt und mit einer vordefinierten Referenz verglichen werden kann. Auf Basis der Referenz können die von den Magnetfeldsensoren erzeugten Signale somit zur Bestimmung einer mechanisch absoluten Winkelposition der Welle verwendet werden. Im Stand der Technik übliche Aufwände zur mechanisch absoluten Winkelbestimmung können daher erfindungsgemäß entfallen. Zudem ermöglicht die radiale Anordnung der Sensoren einen einfachen Aufbau der erfindungsgemäßen Vorrichtung und somit eine kostengünstige und bauraumoptimierte Auslegung entsprechend ausgestatteter Rotationsmaschinen.

Die Auswerteeinheit der erfindungsgemäßen Vorrichtung ist weiter eingerichtet die Signale der Magnetfeldsensoren dadurch miteinander zu vergleichen, dass sie eine Differenz zwischen einem Signal des ersten Magnetfeldsensors und einem Signal des zweiten Magnetfeldsensors bildet. Sowohl das Signal des ersten Magnetfeldsensors als auch das Signal des zweiten Magnetfeldsensors kann jeweils auf einer Vielzahl einzelner Signale basieren und durch deren Kombination erzeugt werden. Hierzu können beispielsweise mehrere Sensorköpfe oder Sensoreinheiten in den verwendeten Magnetfeldsensoren vorgesehen sein. Durch die Differenz werden identische Anteile in den Sensorsignalen unterdrückt und fertigungsbedingte Unregelmäßigkeiten des Magnetkranzes treten besonders günstig in Erscheinung.

Der erste Magnetfeldsensor wird erfindungsgemäß zwei Signale abgeben, wobei eine Phasenverschiebung zwischen dem ersten Magnetfeldsignal und dem zweiten Magnetfeldsignal existieren kann. Weisen die Magnetfeldsignale im Wesentlichen die Eigenschaften einer Sinusfunktion bzw. einer Cosinus-Funktion auf, können aus beiden Magnetfeldsignalen in besonders einfacher Weise Arkustangens-Funktionen erstellt/errechnet werden, welche eine im Wesentlichen abschnittsweise lineare Abbildung des Winkels der Rotationsmaschine bzw. ihrer Welle darstellen. Entsprechendes gilt für ein drittes bzw. ein viertes Magnetfeldsignal, welche von dem zweiten Magnetfeldsensor erzeugt werden. Erfindungsgemäß werden die wie zuvor beschrieben erzeugten Arkustangens-Funktionen des ersten Magnetfeldsensors bzw. der zweiten Magnetfeldsensors voneinander abgezogen um aus dem Sensorsignal ein Winkelsignal zu generieren. Dieser Winkel ist eindeutig über ein Magnetpolpaar des Ringmagneten (elektrisch absoluter Winkel). Um aus dem eindeutigen Winkel über ein Polpaar des Magneten ein eindeutiges Winkelsignal über 360° mechanischer Umdrehung des Magneten zu erhalten, wird die Differenz der beiden Winkelsignale vom Sensor 1 und Sensor 2 gebildet. Das Differenzsignal ist nicht periodisch über die jeweiligen Polpaare und kann daher genutzt werden, um eine eindeutige Kenngröße für das jeweilige Magnetpolpaar zu erzeugen.

Bevorzugt ist der Magnetkranz eingerichtet, die Welle der Rotationsmaschine in radialer Richtung zu umschließen. Mit anderen Worten erstreckt sich der Magnetkranz in azimutaler Richtung, um die Welle und ist insbesondere nicht an einer Stirnseite (einem Extrempunkt in axialer Richtung) angeordnet. Auf diese Weise können mit einer erfindungsgemäßen Vorrichtung ausgestattete Rotationsmaschinen eine kostengünstige und bauraumoptimierte Konstruktion erhalten.

Beispielsweise kann der Magnetkranz mindestens acht magnetische Pole aufweisen. Da in diesem Fall bei einer erfindungsgemäß nicht vorgesehenen idealen Magnetpolgestalt (100%-ige Homogenität der Magnetpole) jeweils zwei Magnetpolübergänge identische Signale liefern, kann eine erfindungsgemäße Vorrichtung fertigungsbedingte Unregelmäßigkeiten ausnutzen, um die im Wesentlichen identischen Magnetpolübergänge voneinander zu unterscheiden. Entsprechend kann eine kostengünstige Winkelbestimmung bei gleichzeitig hoher Winkelauflösung realisiert werden.

Der erste Magnetfeldsensor und der zweite Magnetfeldsensor sind bevorzugt an vordefinierten und bekannten Winkelpositionen in Rotationsrichtung zueinander angeordnet. Mit anderen Worten ist bekannt, um wieviel Grad in Drehrichtung die Position des ersten Magnetfeldsensors von der Position des zweiten Magnetfeldsensors abweicht. Auf diese Weise kann eine rasche und kostengünstige Überführung der Signale des ersten Magnetfeldsensors in das Koordinatensystem des zweiten Magnetfeldsensors (oder umgekehrt) erfolgen. Entsprechend können auch feine Unregelmäßigkeiten, welche sich im Differenzsignal zwischen dem Signal des ersten Magnetfeldsensors und dem Signal des zweiten Magnetfeldsensors wiederfinden, zur Winkelbestimmung aufgelöst werden.

In der vorgenannten Anordnung können die beiden Magnetfeldsensoren selbstverständlich auch an ein und derselben Winkelposition angeordnet sein.

Insbesondere können die Signale auch schaltungstechnisch und/oder unter Vermittlung digitaler Signalverarbeitung zueinander verschoben werden, um ein geeignetes Differenzsignal zu erzeugen. Insbesondere können sich durch die Verschiebung der Arkustangens-Funktionen gegeneinander ergebenden Peaks in der Differenz als Signalbereichsgrenzen zum Vergleich des Signals mit abgespeicherten Referenzen verwendet werden.

Der erste Magnetfeldsensor und/oder der zweite Magnetfeldsensor kann bzw. können als Hall- und/oder XMR-Sensoren ausgestaltet sein. Die Verwendung eines oder mehrerer der vorgenannten Sensorprinzipien kann kostengünstig durch Standardelemente erfolgen und hat sich zudem in Versuchen bewährt.

Zur Winkelbestimmung der Welle kann die Auswerteeinheit eingerichtet sein, eine Referenz (z.B. aus einem Datenspeicher) auszulesen, anhand welcher die identifizierten Unregelmäßigkeiten klassifiziert werden können. Mit anderen Worten wird der "magnetische Fingerabdruck" des Magnetkranzes ermittelt und mit Referenzen verglichen, welchen eine jeweilige Drehwinkelposition der Welle zugeordnet ist. Beispielsweise durch die mathematische Bestimmung eines Abstandes eines erfassten (vorverarbeiteten) Magnetsignals, welches insbesondere zwischen zwei steilen Flanken des Arkustangens-Signals auftritt, kann ein Vergleich mit den Referenzen angestellt werden und diejenige Winkelposition als aktuell vorliegend angenommen bzw. gemeldet werden, welche den geringsten ermittelten Abstand (z.B. mathematische Abweichung) aufweist.

Gemäß einem zweiten Aspekt der vorliegenden Erfindung wird eine Rotationsmaschine vorgeschlagen, welche eine Welle, ein Gehäuse und eine erfindungsgemäße Vorrichtung aufweist. Die Welle ist zumindest teilweise innerhalb einer Gehäusewandung des Gehäuses angeordnet. Bevorzugt durchragt die Welle die Gehäusewandung vollständig, während der Magnetkranz der Vorrichtung innerhalb des Gehäuses angeordnet ist. Mit anderen Worten befindet sich die erfindungsgemäße Vorrichtung im Bereich desjenigen Gehäusevolumens, in welchem auch die magnetisch relevanten Bauteile (z.B. Rotor und Stator) der Rotationsmaschine angeordnet sind. Auf diese Weise wird ein in azimutaler Richtung (also in Umfangsrichtung) erstreckter Magnetkranz für die erfindungsgemäße Winkelbestimmung der Rotationsmaschine verwendet. Diese ist besonders kostengünstig, ermöglicht eine flexible Gestalt der Rotationsmaschine und erfindungsgemäß dennoch eine Winkelbestimmung mit einer maximalen Toleranz kleiner 1°, insbesondere kleiner 0,5°.

Gemäß einem dritten Aspekt der vorliegenden Erfindung wird ein Fahrzeug vorgeschlagen, welches beispielsweise als elektrisch antreibbares Fahrrad (Pedelec, e-Bike o.Ä.) ausgestaltet ist. Zur Winkelbestimmung der Welle der Rotationsmaschine des Fahrzeugs, welche für regelungstechnische Vorgänge eine entscheidende Rolle spielt, wird eine erfindungsgemäße Vorrichtung bzw. eine erfindungsgemäße Rotationsmaschine vorgeschlagen. Es ergeben sich die Merkmale, Merkmalskombinationen und die Vorteile der vorgenannten Erfindungsaspekte entsprechend, so dass zur Vermeidung von Wiederholungen auf die obigen Ausführungen verwiesen wird.

Kurze Beschreibung der Zeichnungen

Nachfolgend werden bevorzugte Ausführungsformen der vorliegenden Erfindung anhand der beigefügten Zeichnungen beschrieben. Es zeigen:

Figur 1 eine schematische Darstellung einer Rotationsmaschine mit einer in axialer Richtung angeordneten Winkelsensorik;

Figur 2 eine erfindungsgemäße Weiterbildung der in Figur 1 dargestellten Anordnung;

Figur 3 eine alternative Darstellung einer erfindungsgemäßen Vorrichtung mit zwei separaten Magnetfeldsensorplatinen;

Figur 4 eine schematische Veranschaulichung der Signalverarbeitung in einem Ausführungsbeispiel einer erfindungsgemäßen Vorrichtung;

Figur 5 eine schematische Veranschaulichung der Signale zweier Magnetfeldsensoren (Arkustangens-Funktionen);

Figur 6 eine Darstellung eines magnetischen Fingerabdrucks (Arkustangens-Differenzsignal) der in Figur 5 gezeigten Zeitsignale;

Figur 7 eine schematische Darstellung von Signalen zur erfindungsgemäßen Winkelbestimmung; und

Figur 8 ein alternatives Flussdiagramm zur Veranschaulichung einer Klassifikation ermittelter Arkustangens-Differenzsignale zur erfindungsgemäßen Winkelbestimmung.

Ausführungsformen der Erfindung

Figur 1 zeigt eine Rotationsmaschine 10 mit einer elektrischen Antriebseinheit 3, welche mechanische Leistung an eine Welle 2 abgibt. Die Welle 2 wird durch die elektrische Antriebseinheit 3 in Richtung zweier Pfeile P angetrieben. Stirnseitig weist die Welle 2 einen Magnetkranz 4 zur axialen Winkelbestimmung auf, dessen Magnetfeld über einen Magnetfeldsensor 5 auf einer Platine (printed circuit board, PCB) 7 erfasst und einer (nicht dargestellten) Auswerteeinheit gemeldet wird. Üblicherweise weist ein solcher Magnetkranz 4 lediglich zwei magnetische Pole auf.

Figur 2 stellt ein erfindungsgemäßes Ausführungsbeispiel einer Rotationsmaschine 10 mit einer erfindungsgemäßen Vorrichtung 1 zur mechanisch absoluten Winkelbestimmung einer Welle 2 dar. Der Magnetkranz 4 ist hierzu innerhalb eines Gehäuses 11 der Rotationsmaschine 10 angeordnet und umgibt die Welle 2 azimutal (in Umfangsrichtung). Zur Erfassung der Magnetfelder des Magnetkranzes 4 weist eine Platine 7 zwei Magnetfeldsensoren 5, 6 auf, welche an unterschiedlichen azimutalen Positionen außerhalb des Magnetkranzes 4 angeordnet sind. Die Welle 2 ist rechtsseitig in einer Wandung des Gehäuses 11 gelagert.

Figur 3 zeigt ein alternatives Ausführungsbeispiel einer erfindungsgemäßen Rotationsmaschine 10 mit einer erfindungsgemäßen Vorrichtung zur mechanisch absoluten Winkelbestimmung der Welle 2 (nicht dargestellt. Der Magnetkranz 4 weist vier Polpaare (jeweils 4xN(ordpol), 4xS(üdpol)) auf, so dass sich grundsätzlich jeweils vier identische Übergänge von S nach N bzw. vier identische Übergänge von N nach S ergeben. Die (in diesem Ausführungsbeispiel) nicht auf einer gemeinsamen Platine 7 angeordneten Magnetfeldsensoren 5, 6 melden die vom Magnetkranz 4 empfangenen Signale einer Auswerteeinheit 8, welche eine erfindungsgemäße mechanisch absolute Winkelbestimmung der Welle 2 durchführt. Die Magnetfeldsensoren 5, 6 bzw. ihre jeweiligen Platinen sind in azimutaler Richtung um einen Winkel $\theta$ von 90° hintereinander angeordnet.

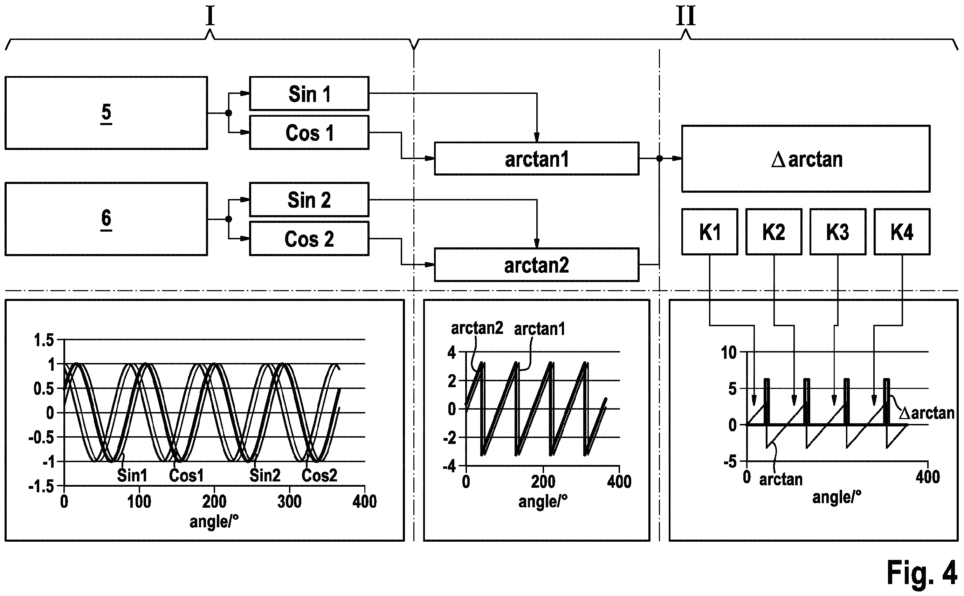

Figur 4 zeigt die Signalverarbeitung der Signale zweier Magnetfeldsensoren 5, 6, welche jeweils zwei Sensoreinheiten (nicht dargestellt) aufweisen. Mittels dieser wird in einem sensorischen Bereich I jeweils ein Sinussignal sin1 bzw. sin2 sowie ein Cosinussignal cos1 bzw. cos2 erzeugt. Das Sinus- und das Cosinussignal eines jeweiligen Sensors 5, 6 werden in einer Signalverarbeitungseinheit II in ein jeweiliges Arkustangens-Signal arctan1 bzw. arctan2 umgewandelt. Unterhalb der vorbeschriebenen Signalverarbeitungsbereiche I, II sind die jeweiligen Signale über dem Winkel graphisch dargestellt. Zur Ermittlung einer mechanisch absoluten Winkelposition wird aus den Arkustangens-Signalen ein Differenzsignal Δarctan erzeugt, welches für einen anschließenden Vergleich in vier zusammenhängende Abschnitte K1, K2, K3, K4 aufgeteilt wird. Die Bereichsgrenzen stimmen im Wesentlichen mit den steilen Flanken des Differenzsignals Δarctan überein. Diese Signalbereiche werden (beispielsweise auf Basis (z.B. durch Summierung) einer vordefinierten Anzahl von Sampling-Werten) mit vordefinierten Referenzen verglichen und so für eine Zuordnung zu einem mechanisch absoluten Winkel der Welle verwendet.

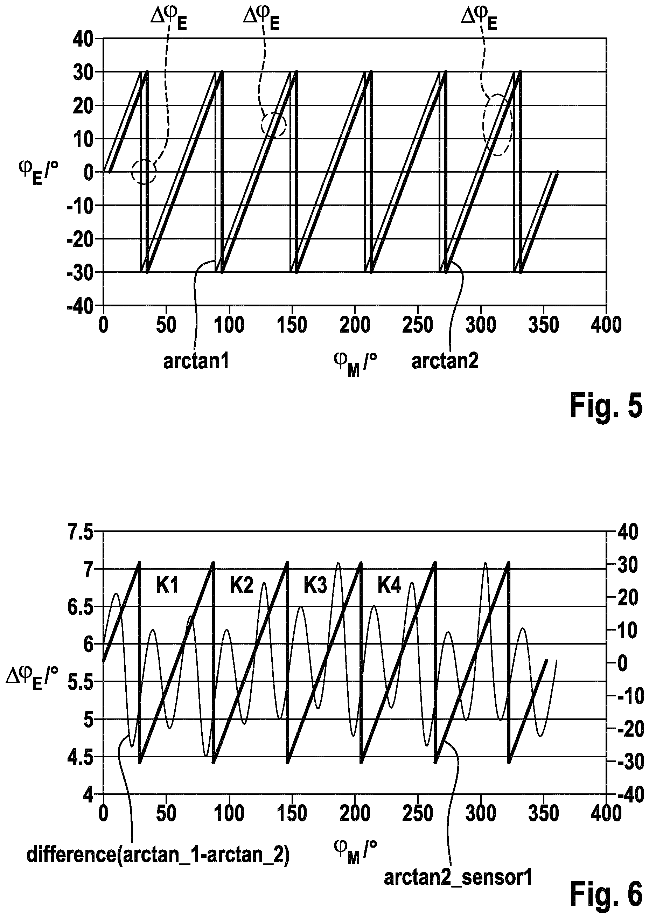

Figur 5 zeigt eine Darstellung der beiden Arkustangens-Funktionen arctan1, arctan2, wie sie im Signalverarbeitungsbereich II in Figur 4 vorgestellt worden sind. Konkret ist der elektrische Winkel $\varphi_E$ über dem mechanischen Winkel $\varphi_M$ aufgetragen. Die Abweichung der beiden Arkustangens -Funktionen, welche sich durch die augenscheinlich geringe Differenz $\Delta \varphi_E$ ergibt, wird in Figur 6 für die vier Signalbereiche K1, K2, K3, K4 über dem mechanischen Winkel $\varphi_M$ aufgetragen.

Figur 6 zeigt eine Darstellung der Differenz $\Delta \varphi_E$ der in Figur 5 dargestellten Arkustangens-Funktionen arctan1, arctan2 über dem mechanischen Winkel $\varphi_M$. Jeder der Signalbereiche K1, K2, K3, K4 weist zwei Peaks auf, deren relative Position und/oder sowie Amplitude sich von dem entsprechenden Peak jedes anderen Bereiches K1, K2, K3, K4 unterscheidet. Entsprechend ist es möglich, die Signale der Bereiche K1, K2, K3, K4 mit entsprechenden abgespeicherten Referenzen (z.B. durch Berechnung eines mathematischen Abstandes der Signalbereiche zu den Referenzen) zu ermitteln und zur Winkelbestimmung zu verwenden. Die wesentlichen physikalischen Effekte, die hierbei von Nutzen sind, sind magnetische Fehler, wie Polbreitenvariation und Inhomogenität des Ringmagneten, die von Polpaar zu Polpaar unterschiedlich sind. Diese werden durch den Vergleich der beiden Winkelsignale identifiziert, da sich bevorzugt jeder Sensor auf zwei unterschiedlichen Polen/Polpaaren zur gleichen Zeit befindet. Beispielsweise lassen sich bei einem achtpoligen Magneten so vier Werte berechnen, die eindeutig für das jeweilige Polpaar stehen. Diese Werte werden genutzt, um eine Korrektur des Winkelinhalts zu berechnen. Der Arkustangens -Winkel wird hierbei zu dem Ausdruck x • (360°/Magnet-Polpaarzahl) addiert. Die Addition (Winkelkorrektur) erfolgt jeweils beim Vorzeichenwechsel des Winkelsignals. Der Multiplikator x wird durch die berechnete Kenngröße bestimmt. Die Kenngröße (K1) bei einem achtpoligen Magneten im Bereich zwischen 0° und 90° wird interpretiert zu dem Wert 0 für x. Für den Bereich 90° bis 180° ist der Wert 1, für den Bereich 180° bis 270° ist der Wert 2 und für den Bereich 270° bis 360° ist der Wert 3. Auf diese Weise erhält man ein eindeutiges Winkelsignal.

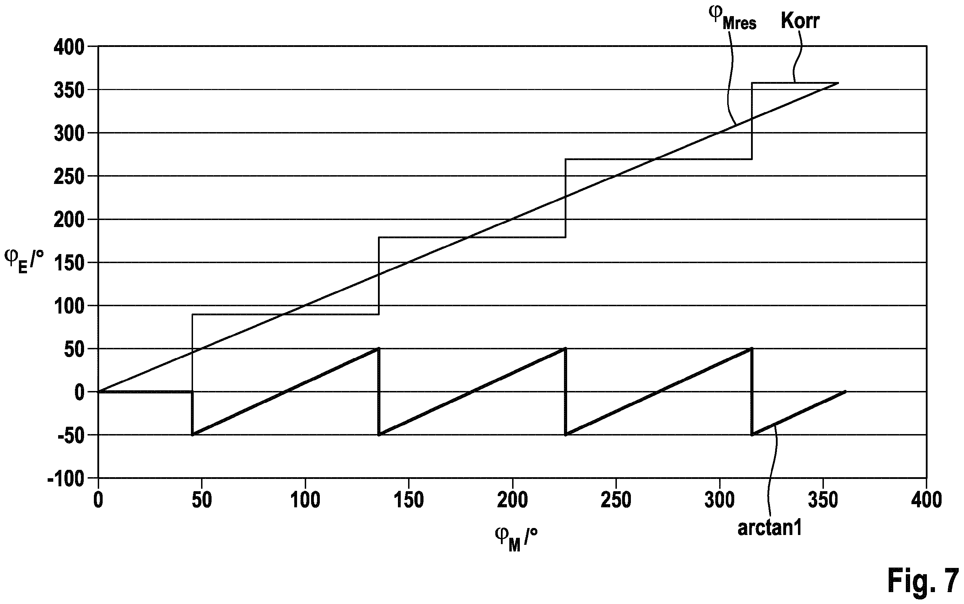

Figur 7 beschreibt die Berechnung des Ergebniswinkels durch die Korrektur des Arkustangens-Signals eines Magnetfeldsensors 5, 6. In Figur 7 ist das Arkustangens-Signal arctan1 des ersten Magnetfeldsensors 5 als sägezahnförmiges Signal über dem mechanischen Winkel $\Delta \varphi_M$ aufgetragen. Nach Identifikation der Positionen der steilen Flanken des Arkustangens-Signals arctan1 wird das in Figur 7 dargestellte Korrektursignal Korr addiert, woraus sich für die Welle der mechanisch absolute Winkel $\varphi_{Mres}$ ergibt. Das Kriterium für die jeweilige Korrektur ergibt sich mathematisch aus der Differenz der beiden Arkustangens -Verläufe gemäß der folgenden Formel:

$$Sp = \frac{\sum_{i=a}^{b}(arctan1(Cos1(i);Sin1(i)) - arctan2(Cos2(i);Sin2(i)))}{(b-a)}$$

$$(a,b) \in \{(50°,85°);(140°,175°);(230°,265°);(315°,355°)\}$$

Das Sensorsystem braucht daher eine "Einlernphase", um das Korrektursignal Korr zu erzeugen, welches entsprechend den Figuren 5/6 erhoben wird. Den Ergebniswinkel (mechanisch absoluter Winkel) erhält man also durch die Heranziehung des Korrektursignals Korr zum Arkustangens-Verlauf des Signals eines Magnetfeldsensors.

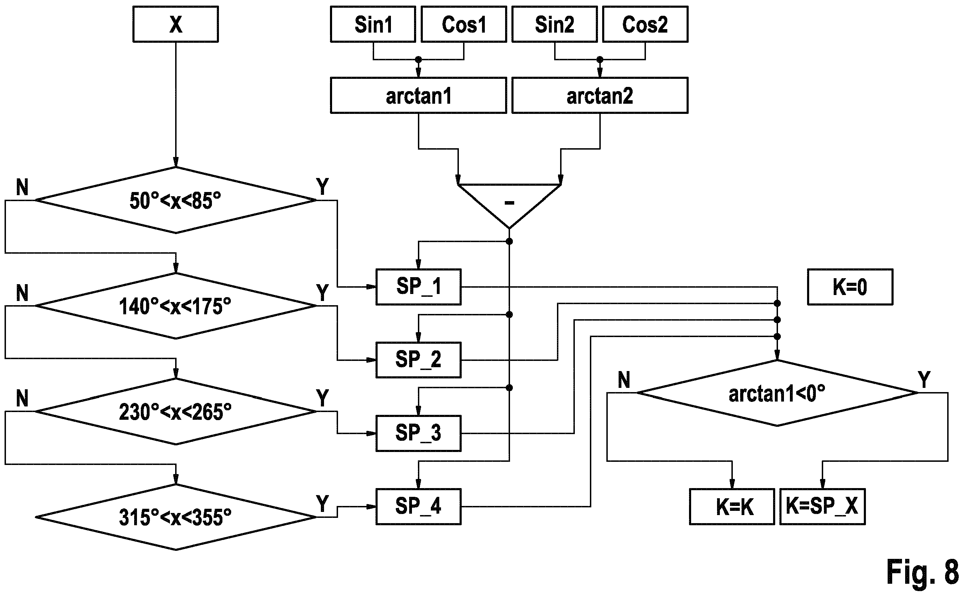

Figur 8 zeigt ein Flussdiagramm zur Erhebung des Korrektursignals aus den vier Sensorsignalen sin1, cos1, sin2, cos2 und einem Referenzsignal x. Wie in Verbindung mit den vorstehenden Figuren beschrieben, werden durch die Magnetfeldsensoren die Magnetfeldsignale sin1, cos1, sin2, cos2 erfasst, dann die Arkustangens-Signale arctan1, arctan2 ermittelt und anschließend voneinander subtrahiert. Sofern der Referenzwinkel x (also der mechanische Winkel $\varphi_M$ der Welle) in einem Bereich zwischen 50° und 85° liegt, wird aus dem Differenzsignal der Arkustangens-Signale und dem Referenzwinkel x ein erster arctan1 kleiner als 0° ist. Sofern dies nicht der Fall ist (N), wird das bislang ermittelte Korrektursignal K zur Korrektur des Winkelsignals verwendet (K = K). Sofern dies der Fall ist (Y), wird der zuvor ermittelte Speicherwert SP_X als Korrektursignal verwendet (K = SP_X).

Das erfindungsgemäße Konzept kann beispielsweise einen definierten Abstand der Magnetfeldsensoren zueinander sowie einen definierten Abstand der Magnetfeldsensoren zum Magnetkranz (auch "Magnetring") vorsehen. Das Sensorsystem ist hinsichtlich der Anzahl der Magnetpole sowie hinsichtlich des Winkels zwischen den Magnetfeldsensoren beliebig variabel. Ein möglicher Parameter für die Funktionstüchtigkeit der Vorrichtung ist die Erfüllung der Spezifikation der Magnetfeldsensoren gemäß dem jeweiligen Datenblatt. Das Konzept kann beispielsweise einen Winkel zwischen den Magnetfeldsensoren entsprechend der Polpaarzahl (z.B. 360°/Polpaarzahl) zwischen den Sensoren vorsehen und einen Luftspalt zwischen dem Magnetkranz und den Magnetfeldsensoren von 2 mm verwenden. Auf diese Weise erzeugt der rotierende Magnetkranz einen periodischen, sinusähnlichen Signalverlauf an den Magnetfeldsensoren.

Die Erfindung stellt somit ein Alternativkonzept zur axialen Winkelsensorik dar. Die Einbauposition in azimutaler Richtung ist relativ beliebig, da eine mechanische Absolutwinkelmessung erfolgt. Zudem können Kosten durch Verwendung preiswerter Sensoren und Masse durch Magnetkränze aus gespritztem Hartferritwerkstoff verringert werden. Durch die Möglichkeit eines Einlernvorgangs für die erfindungsgemäße Vorrichtung können hohe Einbautoleranzen in Kauf genommen werden, wodurch sich die Fertigung vereinfacht. Die kleinen Magnete und Magnetfeldsensoren bedingen zudem einen geringen Bauraumbedarf. Beispielsweise können auch die Sensoren auf der Elektronik-Hauptplatine der Rotationsmaschine mit einer Aussparung für die Motorwelle angeordnet werden, wodurch eine zusätzliche Kostenersparnis und Bauteilvielzahlreduktion möglich ist. Auch eine Geschwindigkeits- und Drehzahlmessung ist durch eine erfindungsgemäße Vorrichtung möglich. Hierzu ist die Winkelbestimmung anhand eines Zeitsignals auszuwerten. Zudem ist eine Bestimmung des Absolutwinkels auch ohne eine Bewegung der Welle möglich, das (nach einem Einlernvorgang) ein eindeutiger Korrekturwert und -winkel vorliegt. Auch eine Temperaturkompensation ist durch die Verwendung zweier Sensoren möglich, wodurch auch eine Redundanz geschaffen wird.

**Patentansprüche**

1. Vorrichtung zur mechanisch absoluten Winkelbestimmung einer Welle (2) einer Rotationsmaschine (3) umfassend:

   - einen Magnetkranz (4) mit einer Vielzahl magnetischer Pole (N, S),
   - einen ersten Magnetfeldsensor (5),
   - einen zweiten Magnetfeldsensor (6), und
   - eine Auswerteeinheit (8),

   wobei

   - der Magnetkranz (4) eingerichtet ist, auf der Welle (2) der Rotationsmaschine (3) angeordnet zu werden,
   - die Magnetfeldsensoren (5) eingerichtet sind, die im Zuge einer Rotation der Welle (2) passierenden Magnetfelder der Pole des Magnetkranzes (4) zu erfassen, und
   - die Auswerteeinheit (8) eingerichtet ist,

      - auf Magnetfeldsignalen (sin1, cos1, sin2, cos2) der Magnetfeldsensoren (5) basierende Signale miteinander zu vergleichen,
      - fertigungsbedingte Unregelmäßigkeiten des Magnetkranzes (4) zu identifizieren, und
      - anhand der identifizierten Unregelmäßigkeiten eine mechanisch absolute Winkelbestimmung der Welle (2) vorzunehmen,

   **dadurch gekennzeichnet, dass**
   der erste Magnetfeldsensor (5) eingerichtet ist, ein erstes Magnetfeldsignal (sin1) und ein zweites Magnetfeldsignal (cos1) auszugeben, und

der zweite Magnetfeldsensor (6) eingerichtet ist, ein drittes Magnetfeldsignal (sin2) und ein viertes Magnetfeldsignal (cos2) auszugeben, wobei das erste Magnetfeldsignal (sin1) und das zweite Magnetfeldsignal (cos1) bzw. das dritte Magnetfeldsignal (sin2) und das vierte Magnetfeldsignal (cos2) eine jeweilige Phasenverschiebung zueinander aufweisen, welche im Wesentlichen 90 Grad beträgt, und wobei die Auswerteeinheit (8) eingerichtet ist, aus dem ersten Magnetfeldsignal (sin1) und dem zweiten Magnetfeldsignal (cos1) bzw. aus dem dritten Magnetfeldsignal (sin2) und dem vierten Magnetfeldsignal (cos2) ein jeweiliges Arkustangens-Signal (arctan1, arctan2) zu erzeugen, wobei die Auswerteeinheit (8) weiter eingerichtet ist, zum Vergleichen der Signale der Magnetfeldsensoren (5, 6) eine Differenz zwischen dem jeweiligen Arkustangens-Signal des ersten Magnetfeldsensors (5) und des zweiten Magnetfeldsensors (6) zu bilden.

2. Vorrichtung nach einem der vorstehenden Ansprüche, wobei der Magnetkranz (4) eingerichtet ist, die Welle (2) in radialer Richtung zu umschließen.

3. Vorrichtung nach einem der vorstehenden Ansprüche, wobei der Magnetkranz (4) acht magnetische Pole (N, S) aufweist.

4. Vorrichtung nach einem der vorstehenden Ansprüche, wobei der erste Magnetfeldsensor (5) und der zweite Magnetfeldsensor (6) in einem vordefinierten und insbesondere bekannten Winkel (ϑ) in Rotationsrichtung (P) zueinander angeordnet sind.

5. Vorrichtung nach einem der vorstehenden Ansprüche, wobei der erste Magnetfeldsensor (5) und/oder der zweite Magnetfeldsensor (6) als Hall-, AMR-, GMR-, TMR oder XMR-Sensoren ausgestaltet ist bzw. sind.

6. Vorrichtung nach einem der vorstehenden Ansprüche, wobei die Auswerteeinheit (8) weiter eingerichtet ist, eine Referenz (K1, K2, K3, K4) auszulesen, um anhand der identifizierten Unregelmäßigkeit eine Winkelbestimmung der Welle (2) vorzunehmen.

7. Vorrichtung nach einem der vorstehenden Ansprüche, wobei die Auswerteeinheit (8) eingerichtet ist,

   - eine vorbestimmte Vielzahl von Werten innerhalb vorbestimmter Bereiche der Magnetfeldsignale oder der Signale der Magnetfeldsensoren (5, 6) auszuwerten und
   - das Ergebnis der Auswertung mit einer Zuordnung zwischen einem mechanischen Winkel der Welle (2) und vordefinierten Signalen der Magnetfeldsensoren (5, 6) zu vergleichen.

8. Rotationsmaschine (10) umfassend

   - eine Welle (2),
   - ein Gehäuse (11) und
   - eine Vorrichtung (1) nach einem der vorstehenden Ansprüche, wobei
   - die Welle (2) zumindest einen Teil einer Gehäusewandung des Gehäuses (11) durchragt, und
   - der Magnetkranz (4) der Vorrichtung innerhalb des Gehäuses (11) angeordnet ist.

9. Fahrzeug, insbesondere elektrisch antreibbares Fahrrad, umfassend eine Vorrichtung (1) nach einem der vorstehenden Ansprüche 1 bis 7 oder eine Rotationsmaschine (3) nach Anspruch 8.

**Claims**

1. Device for mechanically absolute angle determination of a shaft (2) of a rotary machine (3), comprising:

   - a magnetic ring (4) having a multiplicity of magnetic poles (N, S),
   - a first magnetic field sensor (5),
   - a second magnetic field sensor (6), and
   - an evaluation unit (8),

   where

   - the magnetic ring (4) is set up to be arranged on the shaft (2) of the rotary machine (3),

- the magnetic field sensors (5) are set up to detect the magnetic fields of the poles of the magnetic ring (4) passing in the course of a rotation of the shaft (2), and
- the evaluation unit (8) is set up

  - to compare with one another signals based on magnetic field signals (sin1, cos1, sin2, cos2) from the magnetic field sensors (5),
  - to identify production-induced irregularities in the magnetic ring (4), and
  - to perform a mechanically absolute angle determination of the shaft (2) by using the identified irregularities,

**characterized in that**
the first magnetic field sensor (5) is set up to output a first magnetic field signal (sin1) and a second magnetic field signal (cos1), and
the second magnetic field sensor (6) is set up to output a third magnetic field signal (sin2) and a fourth magnetic field signal (cos2), wherein the first magnetic field signal (sin1) and the second magnetic field signal (cos1) and, respectively, the third magnetic field signal (sin2) and the fourth magnetic field signal (cos2) have a respective phase shift relative to each other, which is substantially 90°, and wherein
the evaluation unit (8) is set up to generate a respective arctan signal (arctan1, arctan2) from the first magnetic field signal (sin1) and the second magnetic field signal (cos1) and from the third magnetic field signal (sin2) and the fourth magnetic field signal (cos2), wherein the evaluation unit (8) is further set up to form a difference between the respective arctan signal from the first magnetic field sensor (5) and from the second magnetic field sensor (6) in order to compare the signals from the magnetic field sensors (5, 6).

2. Device according to one of the preceding claims, wherein the magnetic ring (4) is set up to enclose the shaft (2) in the radial direction.

3. Device according to one of the preceding claims, wherein the magnetic ring (4) has eight magnetic poles (N, S).

4. Device according to one of the preceding claims, wherein the first magnetic field sensor (5) and the second magnetic field sensor (6) are arranged in relation to each other at a predefined and in particular known angle ($\vartheta$) in the direction of rotation (P).

5. Device according to one of the preceding claims, wherein the first magnetic field sensor (5) and/or the second magnetic field sensor (6) is or are configured as Hall, AMR, GMR, TMR or XMR sensors.

6. Device according to one of the preceding claims, wherein the evaluation unit (8) is further set up to read a reference (K1, K2, K3, K4) in order to perform an angle determination of the shaft (2) by using the identified irregularity.

7. Device according to one of the preceding claims, wherein the evaluation unit (8) is set up

   - to evaluate a predetermined multiplicity of values within predetermined ranges of the magnetic field signals or the signals from the magnetic field sensors (5, 6), and
   - to compare the result of the evaluation with an association between a mechanical angle of the shaft (2) and predefined signals from the magnetic field sensors (5, 6).

8. Rotary machine (10) comprising

   - a shaft (2),
   - a housing (11) and
   - a device (1) according to one of the preceding claims, wherein
   - the shaft (2) projects through at least part of a housing wall of the housing (11), and
   - the magnetic ring (4) of the device is arranged inside the housing (11).

9. Vehicle, in particular electrically driven bicycle, comprising a device (4) according to one of the preceding Claims 1 to 7 or a rotary machine (3) according to Claim 8.

**Revendications**

1. Dispositif destiné à déterminer mécaniquement l'angle absolu d'un arbre (2) d'une machine tournante (3), comprenant :

   - une couronne magnétique (4) ayant une pluralité de pôles magnétiques (N, S),
   - un premier capteur de champ magnétique (5),
   - un deuxième capteur de champ magnétique (6), et
   - une unité d'évaluation (8),

   dans lequel

   - la couronne magnétique (4) est conçue pour être disposée sur l'arbre (2) de la machine tournante (3),
   - les capteurs de champ magnétique (5) sont conçus pour détecter des champs magnétiques des pôles de la couronne magnétique (4), se produisant au cours d'une rotation de l'arbre (2), et
   - l'unité d'évaluation (8) est conçue
   - pour comparer les uns aux autres des signaux basés sur des signaux de champ magnétique (sin1, cos1, sin2, cos2) des capteurs de champ magnétique (5),
   - pour identifier des irrégularités liées à la fabrication de la couronne magnétique (4), et
   - pour effectuer mécaniquement une détermination de l'angle absolu de l'arbre (2) sur la base des irrégularités identifiées,

   **caractérisé en ce que**
   le premier capteur de champ magnétique (5) est conçu pour délivrer un premier signal de champ magnétique (sin1) et un deuxième signal de champ magnétique (cos1), et
   le deuxième capteur de champ magnétique (6) est conçu pour délivrer un troisième signal de champ magnétique (sin2) et un quatrième signal de champ magnétique (cos2), dans lequel le premier signal de champ magnétique (sin1) et le deuxièmes signal de champ magnétique (cos1) ou le troisième signal de champ magnétique (sin2) et le quatrième signal de champ magnétique (cos2) présentent respectivement les uns par rapport aux autres un déphasage sensiblement égal à 90 degrés, et dans lequel
   l'unité d'évaluation (8) est conçue pour générer, à partir du premier signal de champ magnétique (sin1) et du deuxième signal de champ magnétique (cos1) ou à partir du troisième signal de champ magnétique (sin2) et du quatrième signal de champ magnétique (cos2), un signal d'arc-tangente respectif (arctan1, arctan2), dans lequel l'unité d'évaluation (8) est en outre conçue pour comparer des signaux des capteurs de champ magnétique (5, 6) afin d'établir une différence entre le signal d'arc-tangente respectif du premier capteur de champ magnétique (5) et du deuxième capteur de champ magnétique (6).

2. Dispositif selon l'une quelconque des revendications précédentes, dans lequel la couronne magnétique (4) est conçue pour entourer l'arbre (2) dans la direction radiale.

3. Dispositif selon l'une quelconque des revendications précédentes, dans lequel la couronne magnétique (4) comporte huit pôles magnétiques (N, S).

4. Dispositif selon l'une quelconque des revendications précédentes, dans lequel le premier capteur de champ magnétique (5) et le deuxième capteur de champ magnétique (6) sont disposés l'un par rapport à l'autre en formant un angle (ϑ) prédéfini et notamment connu dans la direction de rotation (P).

5. Dispositif selon l'une quelconque des revendications précédentes, dans lequel le premier capteur de champ magnétique (5) et/ou le deuxième capteur de champ magnétique (6) est ou sont conçu (s) sous la forme de capteurs Hall, AMR, GMR, TMR ou XMR.

6. Dispositif selon l'une quelconque des revendications précédentes, dans lequel l'unité d'évaluation (8) est en outre conçue pour lire une référence (K1, K2, K3, K4) afin d'effectuer une détermination de l'angle de l'arbre (2) sur la base de de l'irrégularité identifiée.

7. Dispositif selon l'une quelconque des revendications précédentes, dans lequel l'unité d'évaluation (8) est conçue

   - pour évaluer une pluralité prédéterminée de valeurs à l'intérieur de régions prédéterminées des signaux de champ magnétique ou des signaux des capteurs de champ magnétique (5, 6) et
- pour comparer le résultat de l'évaluation à une association entre un angle mécanique de l'arbre (2) et des signaux prédéfinis des capteurs de champ magnétique (5, 6).

8. Machine tournante (10) comprenant

    - un arbre (2),
    - un boîtier (11) et
    - un dispositif (1) selon l'une quelconque des revendications précédentes, dans lequel
    - l'arbre (2) passe à travers au moins une partie d'une paroi de boîtier du boîtier (11), et
    - la couronne magnétique (4) du dispositif est disposée à l'intérieur du boîtier (11).

9. Véhicule, notamment bicyclette pouvant être entraîné électriquement, comprenant un dispositif (1) selon l'une quelconque des revendications 1 à 7 précédentes ou une machine tournante (3) selon la revendication 8.

**Fig. 1**

**Fig. 2**

**Fig. 3**

Fig. 4

EP 3 029 427 B1

Fig. 5

Fig. 6

Fig. 7

EP 3 029 427 B1

Fig. 8

EP 3 029 427 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040861 A1
- DE 102011079962 A1
- EP 2559971 A1